# EUROPÄISCHE PATENTANMELDUNG

(11) **EP 2 703 756 A1**
(43) Veröffentlichungstag der Anmeldung: **05.03.2014**
(21) Anmeldenummer: 12007212.9
(22) Anmeldetag: 18.10.2012
(51) Int. Cl.: F25J 3/04, B01D 53/02, C01B 23/00

(54) **Gewinnung von hochreinem Krypton und/oder Xenon**

(30) Priorität: 30.08.2012 DE 102012017187
(71) Anmelder: Linde Aktiengesellschaft, 80331 München (DE)
(72) Erfinder: Eichelmann, Robert, 82272 Moorenweis (DE); Windmeier, Christoph, Dr., 82538 Geretsried (DE)
(74) Vertreter: Imhof, Dietmar

(57) **Zusammenfassung**

Die Erfindung betrifft ein Verfahren (100) zur Gewinnung von Krypton und/oder Xenon aus einem krypton- und/oder xenonhaltigen Rohgemisch (F), das in einem überwiegenden Anteil Sauerstoff und zudem wenigstens ein weiteres Nichtedelgas aufweist, wobei das Verfahren die Schritte umfasst, das Rohgemisch (F) vorzukühlen (3), aus dem vorgekühlten Rohgemisch (F) zumindest einen Teil des Sauerstoffs (GOX) in einem ersten Tieftemperaturrektifikationsschritt abzutrennen (1) und damit ein krypton- und/oder xenonreiches Konzentrat zu erhalten (c), aus dem Konzentrat in einem zweiten Tieftemperaturrektifikationsschritt (2) eine kryptonreiche Fraktion und/oder eine xenonreiche Fraktion zu separieren (k,f) und aus der kryptonreichen Fraktion (k) und/oder der xenonreichen Fraktion (f)anschließend, vorzugsweise mittels wenigstens eines Getters (5, 8), bei dem ersten Tieftemperaturrektifikationsschritt nicht abgetrennten Sauerstoff und das wenigstens eine weitere Nichtedelgas zumindest zu einem Teil zu entfernen. Eine zur Durchführung des Verfahrens (90) eingerichtete Vorrichtung ist ebenfalls Gegenstand der Erfindung.

## Beschreibung

Die Erfindung betrifft ein Verfahren zur Gewinnung von hochreinem Krypton und/oder Xenon, insbesondere aus einem in einer Luftzerlegungsanlage erzeugten Rohgemisch, sowie eine entsprechende Anlage.

### Stand der Technik

Die mit einem Gehalt von etwa 1 ppm bzw. 0,09 ppm in atmosphärischer Luft vorkommenden Edelgase Krypton und Xenon werden üblicherweise durch die Umsetzung beträchtlicher Luftmengen in Luftzerlegungsanlagen gewonnen. Die Siedepunkte von Krypton und Xenon liegen bei 120 K bzw. 165 K, also weit oberhalb der Siedetemperaturen von Stickstoff, Sauerstoff und den anderen Edelgasen. Krypton und Xenon reichern sich deshalb in den üblichen Doppelsäulenrektifikatoren zusammen mit unterschiedlichen Kohlenwasserstoffen im flüssigen Sauerstoff an.

Zur Gewinnung von Krypton und Xenon kann ein Teil des flüssigen Sauerstoffs dem Hauptkondensator oder der Niederdrucksäule der Luftzerlegungsanlage entnommen und in eine Kryptonanreicherungssäule geleitet werden. Aus der Kryptonanreicherungssäule erhält man ein Gemisch, welches ca. 0,3% Krypton, ca. 0,3% Kohlenwasserstoffe und ca. 0,03% Xenon enthält. Hauptkomponente des Gemischs ist Sauerstoff. Ein derartiges Gemisch stellt ein Beispiel für ein "Rohgemisch" im Sinne der vorliegenden Anmeldung dar.

Die maximale Anreicherung von Krypton und Xenon wird durch die im Rohgemisch verbliebenen Kohlenwasserstoffe bestimmt. Aufgrund der geringen Flüchtigkeit konzentrieren sich diese bei der Rektifikation, wie erwähnt, ebenfalls im flüssigen Sauerstoff auf. Aus betrieblichen Gründen sind beispielsweise Gehalte von mehr als 5 Vol.-% Methan unerwünscht. Damit auch bei örtlichen Anreicherungen, Fehlfunktionen oder bei Anlagenstillstand keine unerwünschten Methankonzentrationen entstehen, wird in der Praxis ein Faktor von mindestens 10 eingeplant, d.h. der Methangehalt wird auf maximal 0,3 Vol.-% beschränkt.

Das Rohgemisch wird bei den herkömmlichen Verfahren anschließend unter Druck verdampft, auf ca. 500 °C erwärmt und über einen Katalysator geleitet. Hierbei werden die Kohlenwasserstoffe zu Wasserdampf und Kohlendioxid umgesetzt. Der Wasserdampf und das Kohlendioxid werden mittels Molekularsieben entfernt. Anschließend wird in einer Destillationskolonne der Sauerstoff möglichst weitgehend entfernt und damit ein hochangereichertes Krypton-Xenon-Gemisch gewonnen. Dieses wird im Rahmen dieser Anmeldung auch kurz als "Konzentrat" bezeichnet. In einer sich anschließenden Krypton-Xenon-Rektifikation wird vom Kopf der verwendeten Rektifikationssäule Krypton und aus dem Sumpf kryptonfreies Xenon abgezogen.

Bei der beschriebenen Gewinnung von Krypton und Xenon in Tieftemperaturluftzerlegungsanlagen werden Krypton und Krypton etwa um den Faktor 10⁶ bzw. 10⁷ angereichert. Spurenverunreinigungen in der Luft konzentrieren sich dabei jedoch ebenfalls auf. Hierzu zählen vor allem Treibhausgase wie Tetrafluormethan, Trichlorfluormethan, Dichlordifluormethan, Hexafluorethan und Schwefelhexafluorid.

Fluor- und chlorhaltige Kohlenwasserstoffe (FCKW) sind thermisch hochstabil. So findet beispielsweise die thermische Zersetzung von Tetrafluormethan bei Atmosphärendruck erst bei Temperaturen oberhalb von 900 °C statt. Durch einen Katalysator kann zwar die Zersetzungstemperatur herabgesetzt werden, jedoch führt der Abbau der genannten Verbindungen zu einer Schädigung des Katalysators. Auch die adsorptive Entfernung hat sich bisher bei der Tieftemperaturluftzenegung als ungeeignet erwiesen, da die Verbindungen von den bekannten Molekularsieben nur schlecht adsorbiert werden und diese zudem auch die Adsorber schädigen.

Die in der genannten Weise hergestellten Krypton- und Xenonfraktionen enthalten daher noch messbare Mengen an Verunreinigungen, die durch katalytische Zersetzung und/oder durch Adsorption nicht entfernt werden können.

Die EP 0 863 375 A1 adressiert dieses Problem und schlägt eine dreistufige Endreinigung des erläuterten Konzentrats vor. Diese umfasst zunächst eine Chemisorption der genannten Spurenverunreinigungen mit Phyllosilikaten als Sorbens. Hierbei entstehen Wasser und Kohlendioxid, die in einem zweiten Schritt ebenfalls adsorptiv entfernt werden. In einem dritten Schritt erfolgt eine Sorption von Kohlendioxid. Das Verfahren erweist sich jedoch, wie auch nachfolgend noch näher erläutert, in der Praxis als aufwendig, energetisch nachteilig und in seiner Aufreinigungswirkung als unzulänglich.

Aufgabe vorliegender Erfindung ist es daher, ein Verfahren aufzuzeigen, welches die Gewinnung hochreinen, insbesondere von fluor- und/oder chlorhaltigen Verunreinigungen wie Fluorkohlenwasserstoffen, z.B. Tetrafluormethan, Hexafluorethan und Schwefelhexafluorid, befreiten Kryptons und/oder Xenons ermöglicht.

### Offenbarung der Erfindung

Vor diesem Hintergrund schlägt die Erfindung ein Verfahren zur Gewinnung von Krypton und/oder Xenon, insbesondere aus einem in einer Luftzerlegungsanlage erzeugten Rohgemisch, sowie eine entsprechende Anlage mit den Merkmalen der unabhängigen Patentansprüche vor. Bevorzugte Ausgestaltungen sind Gegenstand der Unteransprüche sowie der nachfolgenden Beschreibung.

### Vorteile der Erfindung

Ein erfindungsgemäßes Verfahren dient zur Gewinnung von vorzugsweise hochreinem Krypton und/oder Xenon aus einem krypton- und/oder xenonhaltigen Rohgemisch. Ein derartiges Rohgemisch kann, wie eingangs erläutert, beispielsweise durch kryogene Luftzerlegung in Luftzerlegungsanlagen hergestellt werden. Das Rohgemisch enthält insbesondere in einem überwiegenden Anteil Sauerstoff und zudem wenigstens ein weiteres Nichtedelgas. Unter "Nichtedelgas" wird hier ein Stoff, insbesondere ein Gas, verstanden, das kein Edelgas darstellt.

Das Verfahren umfasst die Schritte des Patentanspruchs 1.

Wie erläutert, reichern sich Krypton und Xenon in Luftzerlegungsanlagen in der Sauerstofffraktion an. In dieser beträgt der Sauerstoffgehalt in der Regel weit über 90%. Die Sauerstofffraktion enthält ca. 0,3% Krypton, ca. 0,3% Kohlenwasserstoffe und ca. 0,03% Xenon. Ein "überwiegender Anteil" Sauerstoff ist damit ein Sauerstoffanteil von wenigstens 80%.

Vorzugsweise werden aus einem derartigen Rohgemisch vor der Durchführung des erfindungsgemäßen Verfahrens Lachgas, Kohlenwasserstoffe, Wasser und Kohlendioxid abgetrennt. Wie erläutert, ergeben sich anderenfalls möglicherweise unerwünscht hohe Methangehalte. Die Entfernung von Kohlenwasserstoffen erfolgt daher bis auf eine Restkonzentration von vorzugsweise weniger als 20 ppb. Verfahren zur Abtrennung von Lachgas, Kohlenwasserstoffen, Wasser und Kohlendioxid aus einem entsprechenden Rohgemisch sind bekannt. Das Rohgemisch wird hierzu beispielsweise auf 500 °C erhitzt und über einen Edelmetall-Verbrennungskatalysator geleitet, der eine vollständige Zerstörung des in dem Konzentrat befindlichen Methans bewirkt. Die bei dieser Reaktion entstehenden Produkte Wasser und Kohlendioxid sowie zuvor enthaltenes Wasser und Kohlendioxid werden anschließend in Molekularsieben adsorbiert.

Wie bereits teilweise erläutert, erfordern klassische Verfahren zur Gewinnung von Krypton und Xenon eine teils mehrfache kryogene Rektifikation der separierten Krypton- und Xenonfraktionen. Erfindungsgemäß kann hingegen auf die letzten Rektifikationsschritte zur Reinigung von Krypton und Xenon verzichtet werden.

Damit wird eine Reihe der Nachteile der klassischen Verfahren überwunden. In herkömmlichen Verfahren sind insbesondere für die Kühlung der dort verwendeten Kondensatoren beträchtliche Mengen an gasförmigem, kaltem Stickstoff erforderlich. Es ist daher dort aus logistischen Gründen nicht wirtschaftlich, die Feinreinigung von Krypton und Xenon örtlich getrennt von einer Luftzerlegungsanlage (in welcher üblicherweise ein Überschuss entsprechenden gasförmigen Stickstoffs vorliegt) durchzuführen. Erfindungsgemäß reduziert sich der Bedarf an Stickstoff demgegenüber um ca. 50%, was sich in einer Reduktion der Betriebskosten um ca. 40% widerspiegelt.

Die vorliegende Erfindung schlägt, wie erwähnt, vor, die beiden Edelgase Krypton und Xenon zunächst zu aus dem Rohgemisch zu separieren und deren Feinreinigung anschließend in dem oder den Reinigungsschritten vorzugsweise durch chemische Bindung der Verunreinigungen an ein Gettermaterial zu bewerkstelligen. Hierdurch kann auf entsprechende Rektifikationssäulen verzichtet und ein signifikant stabilerer Betrieb des Systems erreicht werden.

Die vorliegende Erfindung hat jedoch auch beträchtliche Vorteile gegenüber weiterentwickelten Verfahren, wie sie beispielsweise in der EP 0 863 375 A1 offenbart sind. Dort ist, wie eingangs erwähnt, eine dreistufige Endreinigung eines Rohgemischs vorgesehen. Wie auch erfindungsgemäß vorgesehen, werden dort zunächst Lachgas, Kohlenwasserstoffe, Wasser und Kohlenstoffdioxid aus einem Rohgemisch abgetrennt. Anschließend erfolgt jedoch dort eine Chemisorption von Fluorkohlenwasserstoffen sowie von Schwefelhexafluorid. Hierdurch werden aber stets Wasser und Kohlendioxid gebildet und in das eigentlich zu reinigende Gemisch freigesetzt. Dies ist durch die verwendeten Sorbentien in Form von Phyllosilikaten (Siliziumoxiden) bedingt.

Daher muss nach der erfolgten Chemisorption erneut eine Adsorption von Wasser und Kohlendioxid vorgenommen werden. Durch diese werden beträchtliche Regenerationsverluste verursacht. Es kommt erneut zu einem Eintrag von Fremdgas in Form von Sauerstoff (als Regeneriergas für die Chemisorbentien) in das Reinstgas. Dieser muss durch einen weiteren Schritt abgetrennt werden. Das in der EP 0 863 375 A1 offenbarte Verfahren ermöglicht ferner keine Entfernung von Lachgas und Kohlenwasserstoffen. Die Verfahrensführung erfordert zudem zwingend eine Erhitzung zwischen zwei kryogenen Trennschritten, also eine Erhitzung von tiefkalt zu heiß mit anschließender erneuter Abkühlung. Dies erweist sich als energetisch ungünstig.

Erfindungsgemäß wird im Gegensatz dazu, wie zuvor erwähnt, in einem ersten Tieftemperaturrektifikationsschritt zumindest einen Teil des Sauerstoffs abgetrennt. Danach erfolgt aber keine Zwischenerwärmung, die über die Erwärmung in den vorhandenen Leitungen und Behältern hinausgehen würde. Das erhaltene krypton- und/oder xenonreiche Konzentrat wird, allenfalls nach Zwischenspeicherung, direkt kalt einem zweiten Temperaturrektifikationsschritt unterworfen, in dem eine kryptonreiche Fraktion und/oder eine xenonreiche Fraktion separiert werden. Erst dann wird, mittels wenigstens eines Getters, bei dem ersten Tieftemperaturrektifikationsschritt nicht abgetrennter Sauerstoff und das wenigstens eine weitere Nichtedelgas zumindest zu einem Teil "warm" entfernt. Dies ist energetisch bedeutend günstiger.

Das Verfahren ist außerdem aufgrund der Stöchiometrieerfordernisse bezüglich Sauerstoff (zur Entfernung von Hexafluorethan) schlecht regelbar. So ist zur Entfernung von Hexafluorethan eine Sauerstoffkonzentration erforderlich, die so zu wählen ist, dass für jedes in dem Gasstrom enthaltene Mol Hexafluorethan ein halbes Mol Sauerstoff vorhanden ist. Schließlich ist eine Entfernung von Leichtsiedern (z.B. Nichtedelgasen wie Kohlenmonoxid, Stickstoff und Wasserstoff) mit entsprechenden Sorbentien nicht möglich.

Erfindungsgemäß kann hingegen eine Entfernung von sämtlichen Halogenverbindungen und verbleibendem Sauerstoff in einem Schritt ohne die Bildung von Wasser und Kohlendioxid erfolgen. Aufgrund der vorzugsweise vorgesehenen Verwendung von Gettern ermöglicht das Verfahren auch die Entfernung von Lachgas und Kohlenwasserstoffen sowie von Leichtsiedern. Insgesamt ermöglicht die vorliegende Erfindung einen geringeren aparativen Aufwand, insbesondere bei Skalierung zu höheren Kapazitäten, einen um circa 50% verringerten Bedarf an flüssigem und gasförmigem Stickstoff, eine schnellere Inbetriebnahme und eine höhere Prozessstabilität. Die gewonnenen Produkte können in wesentlich reinerer Form bereitgestellt werden. Die verbleibenden kumulierten Verunreinigungen im erfindungsgemäß hergestellten Krypton und Xenon liegen vorzugsweise bei weniger als 10 ppm und typischerweise bei weniger als 1 ppm.

Wie erläutert, ist ein vorteilhafter Aspekt der vorliegenden Erfindung die Verwendung von Gettern. Getter werden insbesondere in der Vakuumtechnologie eingesetzt. Es handelt sich hierbei beispielsweise um chemisch reaktive Materialien, die mit Gasmolekülen eine direkte chemische Verbindung eingehen und diese damit einfangen können. Ein entsprechender Einfang kann jedoch auch durch Sorption erzielt werden.

Im Rahmen der vorliegenden Erfindung vorteilhafterweise verwendbare Getter umfassen beispielsweise chemisch aktivierte Nichteisenmetalle wie Aluminium, Nickel, Zirkon, Palladium, Niob, Titan, Hafnium, Barium, Mangan, Tantal, Thorium und/oder Vanadium und/oder wenigstens ein Seltenerdmetall und/oder Verbindungen und/oder Legierungen hiervon, auch beispielsweise mit Eisen, als Gettermaterialien. Hocheffektive Getterlegierungen bestehen beispielsweise aus Titan, Vanadium, Eisen und Mangan in unterschiedlichen Molverhältnissen in Abhängigkeit von den jeweils zu entfernenden Nichtedelgasen. Durch die Verwendung von TiV_{1.5} Fe_{0.4} Mn_{0.1} kann beispielsweise der Wasserstoffpartialdruck eines Gases auf 5 × 10⁻⁶ bar verringert werden. Zirkonhydrid wird beispielsweise in der Vakuumtechnologie verwendet und kann bis zu 40% Sauerstoff oder bis zu 20% Stickstoff binden. Gettermaterialien wie Barium und/oder Barium-Aluminium-Legierungen können ebenfalls eingesetzt werden. Nichtedelgase binden an die Oberfläche von hochaktiven Getterlegierungen oder diffundieren, wie beispielsweise Wasserstoff, in das Metallgitter. Wenn der Partialdruck das Hydridbildungsplateau erreicht, bildet sich mit dem Wasserstoff das jeweilige Metallhydrid. Durch die Verwendung von Gettern kann beispielsweise im Fall von Helium eine Reinheit von 99,9999% (so genanntes Helium 6.0) und mehr erreicht werden. Ein Getter wird vorteilhafterweise bei einer Temperatur von 300 °C bis 600 °C, insbesondere zwischen 350 °C und 450 °C oder zwischen 450°C und 550°C betrieben. Wird ein entsprechendes Edelgas bei 350 °C bis 450 °C über ein Hochtemperatur-Getterbett passieren gelassen, kann eine Reinheit erzielt werden, bei der sich mittels herkömmlicher analytischer Verfahren keine Fremdgase mehr nachweisen lassen.

Das Verfahren eignet sich damit in besonderer Weise für Rohgemische, die als wenigstens ein weiteres Nichtedelgas zumindest Wasserstoff, Stickstoff, Sauerstoff, Kohlenmonoxid, Kohlendioxid, Wasser, Lachgas, Methan, Ethan, Ethen, Ethin, Propan, Tetrafluormethan, Trichlorfluorethan, Dichlordifluormethan, Hexafluorethan und/oder Schwefelhexafluorid umfassen. Das Verfahren eignet sich dabei in besonderer Weise für Rohgemische, die aus Luft gewonnen werden. Insbesondere eignet sich das Verfahren zum Einsatz in industrialisierten Regionen, in denen Luftkontaminationen der erläuterten Art verstärkt vorliegen.

Ein erfindungsgemäßes Verfahren erlaubt es, das wenigstens eine weitere Nichtedelgas zu wenigstens 99% aus der kryptonreichen Fraktion und/oder aus der xenonreichen Fraktion zu entfernen. Eine Entfernung zu 99% entspricht einer Reduktion des Gehalts an Nichtedelgas auf höchstens 1/100 des Anfangsgehalts.

Vorteilhafterweise werden in einem erfindungsgemäßen Verfahren der erste Tieftemperaturrektifikationsschritt mittels einer ersten Rektifikationssäule und/oder der zweite Tieftemperaturrektifikationsschritt mittels einer zweiten Rektifikationssäule durchgeführt. Dies erlaubt eine besonders effektive Abtrennung bzw. Separation der erläuterten Komponenten. Gegenüber dem Stand der Technik lassen sich die erste und die zweite Rektifikationssäule baulich besonders gut kombinieren, weil beispielsweise keine Zwischenerwärmung erforderlich ist.

Hierdurch ist auch ein mobiler Einsatz einer entsprechenden Anlage möglich. Beispielsweise kann die Anlage in einer einzigen Coldbox angeordnet werden, die beispielsweise mit Mineralwolle isoliert und auf einem Anhänger kippbar angebracht werden kann. Die Eignung einer entsprechenden Coldbox für den Transport kann nochmals verbessert werden, wenn zumindest eine Rektifikationssäule beispielsweise in mehrere horizontal angeordnete Teilstücke getrennt wird. Dies kann beispielsweise in Form einer Trennung in einen oberen, einen mittleren und einen unteren Abschnitt erfolgen. Der obere, der mittlere und der untere Abschnitt können nebeneinander angeordnet werden. Flüssigkeiten können jeweils am unteren Ende der entsprechenden Abschnitte entnommen und mit einer Flüssigpumpe am oberen Ende des "darunterliegenden" Abschnitts eingespeist werden. Gase werden im Gegenstrom hierzu jeweils am oberen Ende entnommen und am "darüberliegenden" Abschnitt unten eingespeist. Triebkraft hierfür ist ein Druckgefälle welches durch die Flüssigpumpen überwunden werden muss.

Die erläuterten Maßnahmen, nämlich die Abtrennung und Separation mittels der Tieftemperaturrektifikationsschritte einerseits und die Reinigung mittels Gettern andererseits, entfalten ihre Vorteile insbesondere in Kombination. Die nachgeschaltete Reinigung erfordert keine mehrfachen Erwärmungs- und Abkühlzyklen wie im Stand der Technik, so dass sich die Tieftemperaturrektifikationsschritte mit geringerem energetischem Aufwand und reduziertem Bedarf an Kühlmittel, beispielsweise kaltem, gasförmigen Stickstoff, einsetzen lassen. Andererseits liefern die Tieftemperaturrektifikationsschritte zur Reinigung mittels Gettern optimal vorbereitete Fraktionen, weil hierdurch bereits eine weitgehende Entfernung von Fremdkomponenten erfolgt ist. Durch den Verzicht auf eine Reihe von Schritten gegenüber dem Stand der Technik sind entsprechende Anlagen auch sehr kompakt realisierbar. Insgesamt wird hierdurch ein hochintegriertes, energetisch günstiges Verfahren zur Gewinnung von Krypton und/oder Xenon geschaffen.

Es ist besonders vorteilhaft, den ersten Tieftemperaturrektifikationsschritt bei einem ersten Druck von 1,5 bar bis 5 bar und den zweiten Tieftemperaturrektifikationsschritt bei einem zweiten Druck, der etwa 0,5 bar bis 4 bar unterhalb des ersten Drucks liegt, durchzuführen. Hierbei handelt es sich vorzugsweise um Absolutdrücke. Bei den genannten Drücken erfolgt eine besonders vollständige Abtrennung des Sauerstoffs bzw. eine besonders vorteilhafte Separation von Krypton und/oder Xenon.

Die erste Rektifikationssäule weist vorteilhafterweise einen integrierten Kopfkondensator auf, der unter Verwendung wenigstens eines kryogenen Kälteträgers betrieben werden kann. Hierdurch können die Verluste an Krypton und/oder Xenon minimiert werden, weil sich auf diese Weise Krypton und/oder Xenon nahezu vollständig im Sumpf der Säule anreichern. Hierdurch kann ein weitgehend sauerstofffreies Konzentrat aus Krypton und Xenon mit den gegebenenfalls vorhandenen weiteren Nichtedelgasen gewonnen werden.

Die erste Rektifikationssäule weist vorteilhafterweise einen beheizbaren Sumpfbehälter auf, in dem das Konzentrat zumindest teilweise zwischengespeichert werden kann. Dies erlaubt einen teilweise periodischen Betrieb einer entsprechenden Anlage. Wie erläutert, sind Krypton und/oder Xenon in Luft nur in relativ geringen Konzentrationen vorhanden, so dass ein beträchtlicher Durchsatz in dem ersten Rektifikationsschritt erforderlich ist, um nennenswerte Mengen an Konzentrat zu erhalten. Der zweite Rektifikationsschritt kann daher sinnvollerweise erst dann gestartet werden, wenn ausreichende Mengen Konzentrat vorliegen. Dies wird durch den Sumpfbehälter ermöglicht. Vorzugsweise ist jedoch ein kontinuierlicher Betrieb der ersten und der zweiten Rektifikationssäule in einer entsprechenden Anlage vorgesehen.

Vorteilhafterweise weist auch die zweite Rektifikationssäule einen beheizbaren Sumpfbehälter auf, in dem die xenonreiche Fraktion zumindest teilweise zwischengespeichert werden kann. Dies ermöglicht es, dort das in geringerer Konzentration in Luft enthaltene Xenon zunächst anzureichern und erst dann mittels des Getters nicht abgetrennten Sauerstoff und wenigstens ein weiteres Nichtedelgas zu entfernen.

Im Rahmen der vorliegenden Erfindung wird die kryptonreiche Fraktion am Kopf der zweiten Rektifikationssäule entnommen und in einen Kondensatorbehälter geleitet, aus dem zumindest ein Teil eines Kondensats in die zweite Rektifikationssäule zurückgeführt wird. Durch die Verwendung eines separaten Kondensätorbehälters kann auch hier eine Zwischenspeicherung erfolgen.

Vorteilhafterweise wird auch der Kondensatorbehälter mittels eines kryogenen Kälteträgers betrieben und/oder es wird in dem Kondensatorbehälter der Sauerstoff und/oder das wenigstens eine Nichtedelgas zumindest zu einem Teil durch Verdampfen entfernt. Dies betrifft insbesondere leichtflüchtige Nichtedelgase, die auf diese Weise abgetrennt werden können. Mindestens ein weiteres Nichtedelgas kann im nachgeschalteten Getter entfernt werden.

Die Erfindung umfasst ferner vorteilhafterweise die Kühlung des Rohgemischs unter Verwendung zumindest eines Teils des in dem ersten Tieftemperaturrektifikationsschritt abgetrennten Sauerstoffs. Hierdurch kann Kältemittel eingespart und eine effektive, kostengünstige Kühlung bewirkt werden.

Die Erfindung betrifft auch eine entsprechende Anlage, die zur Durchführung eines Verfahrens wie zuvor erläutert eingerichtet ist. Diese Anlage profitiert von zuvor erläuterten Vorteilen, sodass auf diese ausdrücklich verwiesen werden kann.

Bei er erfindungsgemäßen Anlage sind die Abtrenneinrichtung insbesondere als erste Rektifikationssäule und die Separiereinrichtung als zweite Rektifikationssäule ausgebildet, wobei die erste Rektifikationssäule einen Sumpfbehälter, einen integrierten Kopfkondensator und zwei Trennabschnitte mit jeweils 8 bis 12 theoretischen Trennstufen und/oder die zweite Rektifikationssäule einen Sumpfbehälter, einen mit dem Kopf verbundenen, separaten Kondensatorbehälter und zwei Trennabschnitte mit jeweils 6 bis 24 theoretischen Trennstufen aufweist.

Die Erfindung wird nachfolgend unter Bezugnahme auf die beigefügte Zeichnung näher erläutert, welche eine bevorzugte Ausführungsform der Erfindung zeigt.

Kurze Beschreibung der Zeichnung
- Figur 1: zeigt eine Anlage gemäß einer besonders bevorzugten Ausführungsform der Erfindung in schematischer Darstellung.

- Figur 2: zeigt ein Verfahren gemäß einer besonders bevorzugten Ausführungsform der Erfindung in Form eines Ablaufplans.

Ausführungsform der Erfindung

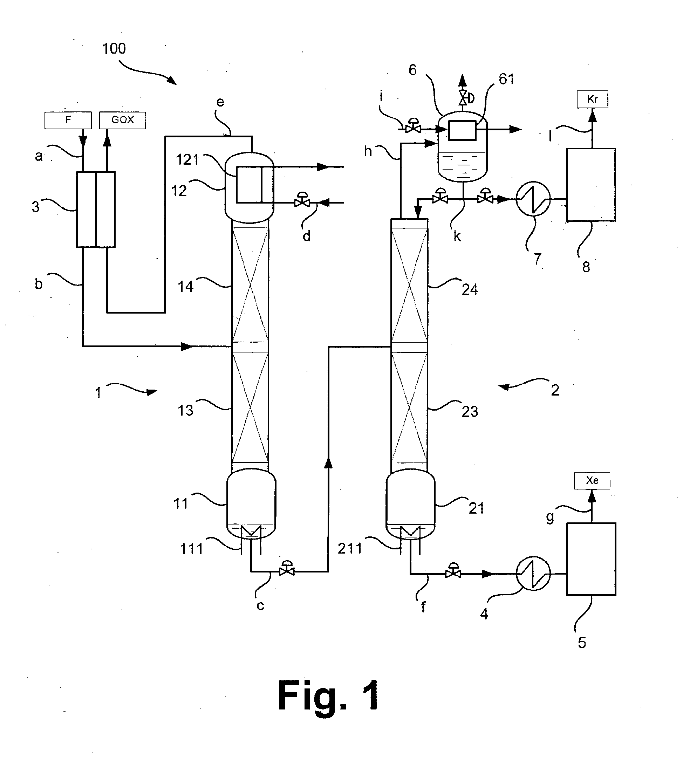

In Figur 1 ist eine Anlage gemäß einer besonders bevorzugten Ausführungsform der Erfindung schematisch dargestellt und insgesamt mit 100 bezeichnet. Die Anlage 100 weist zwei Rektifikationssäulen 1 und 2 auf, die als Abtrenneinrichtung einerseits und als Separiereinrichtung andererseits ausgebildet sind. In einer ersten Rektifikationssäule 1 wird aus einem in die Säule eingespeisten, vorkühlten Rohgemisch F Sauerstoff abgetrennt, in der zweiten Rektifikationssäule 2 wird eine krypton- und/oder eine xenonreiche Fraktion separiert.

Hierzu wird der Anlage 100 ein krypton- und/oder xenonhaltiges Rohgemisch F, das in einem überwiegenden Anteil Sauerstoff und zudem wenigstens ein weiteres Nichtedelgas aufweist, beispielsweise ein entsprechend auf konzentriertes und von zumindest Kohlenwasserstoffen befreites Rohgemisch F einer Luftzerlegungsanlage, über eine Leitung a zugeführt. Die Luftzerlegungsanlage stellt damit eine Bereitstellungseinrichtung dar. Das Rohgemisch durchläuft einen Wärmetauscher 3, in dem es im Gegenstrom zu kaltem Sauerstoff GOX aus der ersten Rektifikationssäule 1 abgekühlt wird. Nach dem Durchlaufen des Wärmetauschers 3 wird das Rohgemisch F mittels einer Leitung b in die erste Rektifikationssäule 1 eingespeist. Die Einspeisung muss nicht mittig der ersten Rektifikationssäule 1 erfolgen. Die erste Rektifikationssäule 1 umfasst einen Sumpfbehälter 11 und einen Kopfkondensator 12. Der Sumpfbehälter 11 ist als Sammelbehälter zur Aufnahme eines flüssigen Konzentrats eingerichtet. Er weist ein Heizelement 111 zur Einbringung von Wärme auf, das vorteilhafterweise elektrisch über Widerstandserwärmung und/oder induktiv betrieben werden kann. Die erste Rektifikationssäule 1 ist als Packungs- oder Füllkörperkolonne mit zwei Abschnitten 13 und 14 ausgebildet. Jeder der Abschnitte 13 und 14 weist beispielsweise 8 bis 12 theoretische Trennstufen auf. Die erste Rektifikationssäule 1 wird vorteilhafterweise bei einem Druck von 1,5 bis 5 bar abs. betrieben.

In dem Kopfkondensator 12 ist ein Wärmetauscher 121 vorgesehen, der mittels eines über eine Leitung d zugeführten, vorzugsweise flüssigen kryogenen Kälteträgers betrieben wird. Der Mengenstrom des flüssigen kryogenen Kälteträgers, der den Wärmetauscher 121 in der Leitung d zugeführt wird, beträgt in etwa 35 bis 65 % der zugeführten Stoffmenge an Rohgemisch. Hierbei handelt es sich typischerweise um 60 bis 300 Normkubikmeter pro Stunde flüssigen Stickstoff, flüssigen Sauerstoff, flüssiges Argon oder deren Gemische. Aufgrund der Temperaturen in der ersten Rektifikationssäule 1 reichert sich am Boden, d.h. im Sumpfbehälter 11 der ersten Rektifikationssäule 1, ein krypton- und/oder xenonreiches Konzentrat an, am Kopf der ersten Rektifikationssäule 1 kann über eine Leitung e kalter, gasförmiger Sauerstoff GOX entnommen werden. Dieser kann teilweise kondensiert und als Rücklauf verwendet werden. Er kann auch, wie erläutert, zur Kühlung in dem Wärmetauscher 3 verwendet werden.

Insbesondere dann, wenn ein ausreichender Füllstand in den Sumpfbehälter 11 der ersten Rektifikationssäule 1 vorliegt, kann über eine Leitung c das Konzentrat kontinuierlich oder intermittierend entnommen und, nicht zwingend mittig, in eine zweite Rektifikationssäule 2 überführt werden. Auch die zweite Rektifikationssäule 2 weist einen Sumpfbehälter 21 mit einem entsprechenden Heizelement 211 auf, der zur Speicherung eingerichtet sein kann. Anders als die erste Rektifikationssäule 1 kann die zweite Rektifikationssäule 2 jedoch mit einem von der Säule getrennten Kopfkondensator, nachfolgend als Kondensatorbehälter 6 bezeichnet, ausgebildet sein. Die zweite Rektifikationssäule 2 selbst weist beispielsweise ebenfalls zwei Abschnitte 23 und 24 auf, und ist als Packungs- oder Füllkörperkolonne ausgebildet. Der Betriebsdruck der zweiten Rektifikationssäule 2 liegt vorteilhafterweise um 0,5 bis 4 bar unterhalb des erläuterten Drucks der ersten Rektifikationssäule 1. Jeder der beiden Abschnitte 23 und 24 besitzt beispielsweise 6 bis 24 theoretische Trennstufen.

Der Kondensatorbehälter 6 ist so konstruiert, dass er zugleich als Sammelbehälter für eine entsprechende Fraktion eingerichtet ist. Die zweite Rektifikationssäule 2 wird derart betrieben, dass sich im Sumpfbehälter 21 im Wesentlichen eine xenonreiche und/oder am Kopf der zweiten Rektifikationssäule 2 im Wesentlichen eine kryptonreiche Fraktion anreichert. Die xenonreiche Fraktion im Sumpfbehälter 21 der zweiten Rektifikationssäule 2 kann, insbesondere intermittierend, der zweiten Rektifikationssäule 2 über eine Leitung f entnommen werden. Sie kann in dann einem Wärmetauscher 4 erwärmt und in die Gasphase überführt werden. Zur Feinreinigung in einem Reinigungsschritt kann diese anschließend in einem Getter 5, wie zuvor erläutert, von in den ersten Temperaturrektifikationsschritt in der ersten Rektifikationssäule 1 nicht abgetrenntem Sauerstoff sowie dem wenigstens einen weiteren Nichtedelgas, beispielsweise Sauerstoff, Schwefelhexafluorid, Hexafluorethan, Ethan, Ethen, Ethin, Propan, Wasser, Kohlendioxid und Lachgas, befreit werden. Der Getter 5 stellt damit eine Reinigungseinrichtung dar, der über Leitung g hochreines Xenon entnommen werden kann.

In entsprechender Weise wird in dem Kondensatorbehälter 6 vom Kopf der zweiten Rektifikationssäule über eine Leitung h eine Fraktion entnommen. In den Kondensatorbehälter 6 scheidet sich ein Kondensat ab, das über eine Leitung k einerseits teilweise erneut der der zweiten Rektifikationssäule 2 zugeführt werden kann und dort im Gegenstrom zu aufsteigenden Dämpfen herabrieselt, und/oder das ebenfalls über einen Wärmetauscher 7 verdampft werden kann. Der Kondensatorbehälter 6 ist ebenfalls mit einem Wärmetauscher 61 ausgestattet. Dieser wird von einem über eine Leitung i zugeführten Kälteträger durchströmt. Hierbei handelt es sich vorzugsweise um ein kaltes gasförmiges Medium, welches sich erwärmt. Ein Teil des Kälteträgers kann aus einem Dampfstrom aus dem Wärmetauscher 121 bestehen. Anfallende Inertgase (so genannte "Leichtsieder", z.B. Wasserstoff, Stickstoff, Sauerstoff und Kohlenmonoxid) können am höchsten Punkt des Kondensatorbehälters 6 abgeführt werden. Nach einer Erwärmung in einem Wärmetauscher 7 wird auch die dann gasförmige, kryptonreiche Fraktion vom Kopf der Rektifikationssäule 2 vorzugsweise intermittierend in einem entsprechenden Getter 8 von bei dem ersten Tieftemperaturrektifikationsschritt nicht abgetrennten Sauerstoff und dem wenigstens einen weiteren Nichtedelgas befreit. Auch der Getter 8 stellt damit eine Reinigungseinrichtung dar. Vor der Behandlung der entsprechenden Fraktionen in den Gettern 5 bzw. 8 werden diese vorzugsweise auf entsprechende Temperaturen erwärmt.

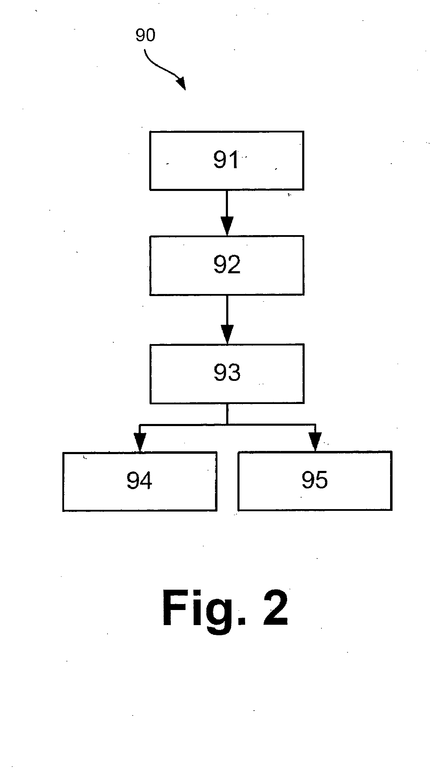

In Figur 2 ist ein Verfahren gemäß einer besonders bevorzugten Ausführungsform der Erfindung dargestellt und insgesamt mit 90 bezeichnet. In einem ersten Verfahrensschritt 91 wird dabei ein vorgekühltes Rohgemisch bereitgestellt. Wie bereits mehrfach erläutert, wird in einem ersten Tieftemperaturrektifikationsschritt anschließend ein Teil in dem Rohgemisch enthaltenen Sauerstoffs abgetrennt. Dies entspricht Schritt 92. Hierdurch wird ein krypton- und/oder xenonreiches Konzentrat erhalten. Dieses wird in einem zweiten Tieftemperaturrektifikationsschritt in eine kryptonreiche und/oder eine xenonreiche Fraktion separiert. Der entsprechende Separationsschritt ist mit 93 bezeichnet. Je nach Bedarf wird anschließend aus der kryptonreichen Fraktion und/oder aus der xenonreichen Fraktion mittels eines Getters bei dem ersten Temperaturrektifikationsschritt nicht abgetrennter Sauerstoff und wenigstens je ein weiteres Nichtedelgas zumindest zu einem Teil entfernt. Dies ist mit den Schritten 94 und 95 veranschaulicht. Die Schritte 94 und 95 werden wahlweise durchgeführt, je nach Bedarf an zu gewinnenden Gasen.

### Bezugszeichenliste

- 100: Anlage zur Gewinnung von Krypton und/oder Xenon
- 90: Verfahren zur Gewinnung von Krypton und/oder Xenon
- 1: erste Rektifikationssäule
- 2: zweite Rektifikationssäule
- 3: Wärmetauscher
- 4: Wärmetauscher
- 5: Getter
- 6: Kondensatorbehälter
- 61: Wärmetauscher
- 7: Wärmetauscher
- 8: Getter
- 11, 21: Sumpfbehälter
- 12: Kondensator
- 13, 23: erster Säulenabschnitt
- 14, 24: zweiter Säulenabschnitt
- 111, 211: Heizeinrichtung
- 121: Wärmetauscher
- a - I: Leitungen
- 91: Vorkühlung
- 92: Abtrennung
- 93: Separation
- 94, 95: Entfernung

## Patentansprüche

1. Verfahren (90) zur Gewinnung von Krypton und/oder Xenon aus einem Sauerstoff, Krypton- und/oder Xenon enthaltenden Rohgemisch (F), wobei das Verfahren die Schritte umfasst, aus dem Rohgemisch (F) zumindest einen Teil des Sauerstoffs (GOX) in einem ersten Tieftemperaturrektifikationsschritt abzutrennen (92) und damit ein krypton- und/oder xenonreiches Konzentrat zu erhalten, aus dem Konzentrat in einem zweiten Tieftemperaturrektifikationsschritt eine kryptonreiche Fraktion und/oder eine xenonreiche Fraktion zu separieren (93), und die kryptonreiche Fraktion und/oder die xenonreichen Fraktion anschließend in mindestens einem Reinigungsschritt (94, 95), in dem wenigstens ein Getter (5, 8) verwendet wird, weiter zu reinigen.

2. Verfahren (90) nach Anspruch, bei dem als Gettermaterial für den wenigstens einen Getter (5, 8) Aluminium, Nickel, Zirkon, Palladium, Niob, Titan, Vanadium, Eisen, Hafnium, Barium, Mangan, Tantal, Thorium, und/oder wenigstens ein Seltenerdmetall und/oder wenigstens eine Verbindung und/oder Legierung hiervon verwendet wird.

3. Verfahren nach Anspruch 1, oder 2 bei dem das Rohgemisch (F) in einem überwiegenden Anteil Sauerstoff und zudem wenigstens ein weiteres Nichtedelgas umfasst. das Rohgemisch (F) vor dem ersten Tieftemperaturrektifikationsschritt vorgekühlt wird (91), und bei dem in dem Reinigungsschritt (94, 95) das wenigstens eine Nichtedelgas zumindest zu einem Teil entfernt wird.

4. Verfahren (90) nach Anspruch 3, bei dem das Rohgemisch (F) wenigstens eine weitere Nichtedelgas zumindest Wasserstoff, Stickstoff, Sauerstoff, Kohlenmonoxid, Kohlendioxid, Wasser, Lachgas, Methan, Ethan, Ethen, Ethin, Propan, Tetrafluormethan, Trichlorfluormethan, Dichlordifluormethan, Hexafluorethan und/oder Schwefelhexafluorid umfasst.

5. Verfahren (90) nach Anspruch 3 oder 4, bei dem das wenigstens eine weitere Nichtedelgas zu wenigstens 99% aus der kryptonreichen Fraktion und/oder aus der xenonreichen Fraktion entfernt wird.

6. Verfahren (90) nach einem der vorstehenden Ansprüche, bei dem der erste Tieftemperaturrektifikationsschritt (92) mittels einer ersten Rektifikationssäule (1) und/oder bei dem der zweite Tieftemperaturrektifikationsschritt (93) mittels einer zweiten Rektifikationssäule (2) durchgeführt wird.

7. Verfahren (90) nach Anspruch 5, bei dem der erste Tieftemperaturrektifikationsschritt (92) bei einem ersten Druck von 1,5 bar bis 5 bar abs. und der zweite Tieftemperaturrektifikationsschritt (93) bei einem zweiten Druck, der 0,5 bar bis 4 bar unterhalb des ersten Drucks liegt, durchgeführt wird.

8. Verfahren (90) nach einem der vorstehenden Ansprüche 5 oder 6, bei dem die erste Rektifikationssäule (1) mit einem integrierten Kopfkondensator (12) unter Verwendung wenigstens eines kryogenen Kälteträgers betrieben wird.

9. Verfahren (90) nach einem der vorstehenden Ansprüche 5 bis 7, bei dem die erste Rektifikationssäule (1) mit einem beheizbaren Sumpfbehälter (11) betrieben wird, in dem das Konzentrat zumindest zeitweise zwischengespeichert werden kann und/oder bei dem die zweite Rektifikationssäule (2) mit einem beheizbaren Sumpfbehälter (21) betrieben wird, in dem die xenonreiche Fraktion zumindest zeitweise zwischengespeichert wird.

10. Verfahren (90) nach einem der vorstehenden Ansprüche 5 bis 8, bei dem die kryptonreiche Fraktion am Kopf der zweiten Rektifikationssäule (2) entnommen und in einen Kondensatorbehälter (6) überführt wird, aus dem zumindest ein Teil eines Kondensats in die zweite Rektifikationssäule (2) zurückgeführt wird.

11. Verfahren (90) nach Anspruch 9, bei dem die kryptonreiche Fraktion in dem Kondensatorbehälter (6) zumindest zeitweise zwischengespeichert werden kann.

12. Verfahren (90) nach Anspruch 9 oder 10, bei dem der Kondensatorbehälter (6) mittels wenigstens eines kryogenen Kälteträgers betrieben wird und/oder in dem Kondensatorbehälter (6) das wenigstens eine weitere Nichtedelgas zumindest zu einem Teil durch Verdampfen entfernt wird.

13. Verfahren (90) nach einem der vorstehenden Ansprüche, bei dem das Rohgemisch unter Verwendung zumindest eines Teils des in dem ersten Tieftemperaturrektifikationsschritt (92) abgetrennten Sauerstoffs (GOX) gekühlt wird.

14. Anlage (100), die zur Durchführung eines Verfahrens (90) nach einem der vorstehenden Ansprüche eingerichtet ist, mit einer Abtrenneinrichtung (1), die dafür eingerichtet ist, aus dem bereitgestellten Rohgemisch (F) zumindest einen Teil des Sauerstoffs (GOX) in einem ersten Tieftemperaturrektifikationsschritt (92) abzutrennen und damit ein krypton- und/oder xenonreiches Konzentrat zu erhalten, eine Separiereinrichtung (2), die dafür eingerichtet ist, aus dem Konzentrat in einem zweiten Tieftemperaturrektifikationsschritt (93) eine kryptonreiche Fraktion und/oder eine xenonreiche Fraktion zu separieren, und wenigstens einer Reinigungseinrichtung (94, 95), die dafür eingerichtet ist, aus die kryptonreiche Fraktion und/oder die xenonreichen Fraktion anschließend weiter zu reinigen, wobei die Reinigungseinrichtung (94, 95) wenigstens einen Getter (5, 8) enthält und die Anlage insbesondere eine Kühleinrichtung (3), die dafür eingerichtet ist, das Rohgemisch (F) vorzukühlen.

15. Anlage (100) nach Anspruch 14, bei der der wenigstens eine Getter (5, 8) vorzugsweise Aluminium, Nickel, Zirkon, Palladium, Niob, Titan, Vanadium, Hafnium, Barium, Mangan, Tantal, Thorium, Eisen und/oder wenigstens ein Seltenerdmetall und/oder Verbindungen und/oder Legierungen hiervon als Gettermaterial aufweist.
